# EUROPÄISCHE PATENTSCHRIFT

(11) **EP 1 630 778 B1**
(45) Veröffentlichungstag und Bekanntmachung des Hinweises auf die Patenterteilung: **11.09.2013**
(21) Anmeldenummer: 05016476.3
(22) Anmeldetag: 29.07.2005
(51) Int. Cl.: B60Q 3/04, B60Q 1/26

(54) **Helligkeitssensorik für eine Anzeigeeinrichtung eines Kraftfahrzeugs**
Brightness sensor for a display device of a motor vehicle
Capteur de luminosité pour un dispositif d'affichage d'un vehicule à moteur

(30) Priorität: 27.08.2004 DE 102004041504
(43) Veröffentlichungstag der Anmeldung: 01.03.2006
(73) Patentinhaber: AUDI AG, 85045 Ingolstadt (DE)
(72) Erfinder: Erlacher, Markus, 85077 Manching (DE); Popken, Markus, 85139 Wettstetten (DE)

(56) Entgegenhaltungen:
- EP-A- 0 443 185
- EP-A- 1 136 977
- US-A- 5 488 434
- PATENT ABSTRACTS OF JAPAN Bd. 1997, Nr. 11, 28. November 1997 (1997-11-28) & JP 09 185036 A (ALPINE ELECTRON INC), 15. Juli 1997 (1997-07-15)
- PATENT ABSTRACTS OF JAPAN Bd. 1997, Nr. 03, 31. März 1997 (1997-03-31) & JP 08 295177 A (ICHIKOH IND LTD), 12. November 1996 (1996-11-12)

## Beschreibung

Aus der DE 40 05 444 ist ein Verfahren und eine Vorrichtung zur Unterstützung eines Kraftfahrers bei einem Spurwechsel bekannt. Die Vorrichtung umfasst eine Anzeige anhand derer der Kraftfahrzeugfahrer durch eine rote, gelbe oder grüne LED einen Hinweis erhält, ob ein Spurwechsel möglich (grün), gefährlich (gelb) oder mit hohem Gefährdungspotential (rot), möglich ist. Die Helligkeit der LED ist Aussenlicht abhängig gesteuert, wozu eine Fotodiode dem linken und/oder rechten Aussenspiegel, an dem auch die Anzeige vorgesehen ist, zugeordnet ist.

Aufgabe der Erfindung ist die weitere Verbesserung der Helligkeitssensorik einer Anzeigeeinrichtung eines Kraftfahrzeugs insbesondere eines Spurwechselassistenten.

Die Aufgabe wird erfindungsgemäß durch den Gegenstand des Patentanspruches 1 gelöst.

Vorteil der Erfindung ist, dass wenigstens ein erster und ein zweiter Lichtsensor, eine Auswerteeinheit zur Auswertung der Signale der Lichtsensoren, eine Anzeigeeinrichtung und eine Einrichtung zur Veränderung der Helligkeit der Anzeigeeinrichtung aufgrund des Signales des ersten Lichtsensors zur Erfassung des Umgebungslichtes und des Signals des zweiten Lichtsensors zur Erfassung des in Richtung auf die Anzeigeeinrichtung gerichteten Lichtes, vorgesehen ist. Die Helligkeit der Anzeigeeinrichtung kann somit in Abhängigkeit vom Umgebungslicht und auf die Anzeigeeinrichtung auftreffende Licht optimal eingestellt werden, so dass ein Ablesen für den Kraftfahrzeugfahrer unabhängig von den Lichtverhältnissen gut möglich ist.

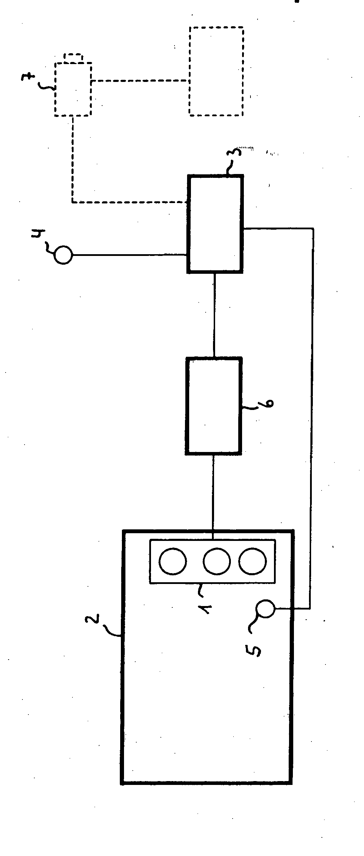

Weitere Vorteile und Einzelheiten der Erfindung ergeben sich aus der nachfolgenden Beschreibung eines Ausführungsbeispieles anhand der Zeichnung in Verbindung mit den Unteransprüchen.

Aus der Zeichnung geht hervor, dass eine Anzeigeeinrichtung 1 eines nicht näher dargestellten Spurwechselassistenten, beispielsweise einem Aussenspiegel 2 eines Kraftfahrzeuges zugeordnet ist. Einer Auswerteeinrichtung 3 ist das Signal eines ersten und das Signal eines zweiten Lichtsensors 4,5 zuführbar, wobei der erste Lichtsensor 4 das Umgebungslicht und der zweite Lichtsensor 5 das auf die Anzeigeeinrichtung 1 auftreffende bzw. gerichtete Licht detektiert. Der zweite Lichtsensor 5 ist hierzu vorzugsweise im Bereich der Anzeigeeinrichtung 1 angeordnet. In Abhängigkeit der Signale des ersten und zweiten Lichtsensors 4, 5 erzeugt die Auswerteeinrichtung 3, beispielsweise durch Zugriff auf eine Matrix oder in Abhängigkeit von zumindest einer Kennlinie, ein Ausgangssignal zur Ansteuerung einer Helligkeitsregeleinrichtung 6, die der Anzeigeeinrichtung 1 zugeordnet ist. Die Auswerteeinrichtung 3 und die Helligkeitsregeleinrichtung 6 sind so ausgeführt, dass bei einem gefahrlosen Spurwechsel die Leuchtkraft der Anzeigeeinrichtung 1 für den Kraftfahrzeugfahrer unterschwellig und bei gegebener Gefahr, oder Erfassen eines Fahrzeuges in der Nachbarspur oder im Gefahrenbereich eine überschwellige Helligkeit eingestellt wird, die den Kraftfahrzeugfahrer aufmerksam macht. Im Rahmen der Erfindung können der Auswerteeinrichtung 3 anstelle oder zusätzlich zu den Signalen der Lichtsensoren 4,5, insbesondere des ersten Lichtsensors 4, auch das Signal einer Kamera, eines Regendetektors, eines Fahrerassistenzsystems, eines Lichtsteuersystems, eines Front- und/oder Rücküberwachungssystems, eines Spurhaltesystems, und/oder der Sensor einer Klimaanlage, als Beispiele einer Fahrzeugkomponente, zugeführt und zur Auswertung herangezogen werden.

Im Rahmen der Erfindung kann die Anzeigeeinrichtung 1 sowohl im rechten als auch im linken Aussenspiegel aber auch am Rückspiegel angeordnet oder in das Sichtfeld des Kraftfahrzeugfahrers projiziert werden. Ferner kann zumindest ein Lichtsensor 4, 5 als Infrarotlichtsensor ausgeführt sein. Im Rahmen der Erfindung kann die Helligkeit und/oder der Kontrast der Anzeigeeinrichtung 1 aufgrund der Signale der Lichtsensoren 4,5 eingestellt werden, wenn diese z.B. als Anzeigeeinrichtung 1 eines Navigationssystems, einer Multimediaeinrichtung, eines Fahrzeuginformationssystems und/oder eines Kombünstruments ausgeführt ist. Aufgrund der Signale der Lichtsensoren 4, 5 ist aber auch die Hintergrundbeleuchtung von Schaltern oder Bedienelementen einstellbar.

Besonders vorteilhaft ist es, wenn aufgrund der Signale der Lichtsensoren 4, 5 die Richtung des einfallenden Lichtes berechnet und in Abhängigkeit davon ein Signal zur Einstellung der Helligkeit der Anzeigeeinrichtung 1 erzeugt wird.

### Liste der Bezugszeichen:

- 1: Anzeigeeinrichtung
- 2: Aussenspiegel
- 3: Auswerteeinrichtung
- 4: erster Lichtsensor
- 5: zweiter Lichtsensor
- 6: Helligkeitsregeleinrichtung
- 7: Kamera

## Patentansprüche

1. Kraftfahrzeug-Anzeigeeinrichtung, insbesondere für einen Spurwechselassistenten, mit zugeordneter Helligkeitssensorik umfassend:
- einen Lichtsensor (4), der das Umgebungslicht empfängt,
- eine Auswerteeinrichtung (3), ausgebildet zur Auswertung der Signale des Lichtsensors (4),
- eine Helligkeitsregeleinrichtung (6), ausgebildet zur Veränderung der Helligkeit der Anzeigeeinrichtung (1) aufgrund eines Signals des Lichtsensors (4),
**dadurch gekennzeichnet,**
**dass** ein zweiter Lichtsensor (5) vorgesehen ist, der das in Richtung auf die Anzeigeeinrichtung (1) gerichtete Licht empfängt,
und **dass** die Auswerteeinrichtung (3) zur Auswertung der Signale beider Lichtsensoren (4, 5) und die Helligkeitsregeleinrichtung (6) zur Veränderung der Helligkeit der Anzeigeeinrichtung (1) aufgrund der Signale der beiden Lichtsensoren (4, 5) ausgebildet ist.

2. Kraftfahrzeug-Anzeigeeinrichtung mit zugeordneter Helligkeitssensorik nach Anspruch 1,
**dadurch gekennzeichnet,**
**dass** die Auswerteeinrichtung (3) aufgrund der Signale der Lichtsensoren (4, 5) in Verbindung mit zumindest einer Kennlinie die Helligkeit der Anzeigeeinrichtung (1) verändert.

3. Kraftfahrzeug-Anzeigeeinrichtung mit zugeordneter Helligkeitssensorik nach Anspruch 1 oder Anspruch 2,
**dadurch gekennzeichnet**
**dass** zumindest ein Lichtsensor (4, 5) einer weiteren Fahrzeugkomponente zugeordnet ist.

4. Kraftfahrzeug-Anzeigeeinrichtung mit zugeordneter Helligkeitssensorik nach Anspruch 3,
**dadurch gekennzeichnet,**
**dass** die weitere Fahrzeugkomponente eine Kamera und/oder ein Regendetektor und/oder ein Fahrerassistenzsystem und/oder ein Lichtsteuersystem und/oder ein Front- und/oder Rücküberwachungssystem und/oder ein Spurhaltesystem und/oder der Sensor einer Klimaanlage ist.

5. Kraftfahrzeug-Anzeigeeinrichtung mit zugeordneter Helligkeitssensorik nach einem der Ansprüche 1 bis 4,
**dadurch gekennzeichnet,**
**dass** die Lichtsensoren (4, 5) als Fotodioden und/oder als Kamera (7) ausgeführt sind.

6. Kraftfahrzeug-Anzeigeeinrichtung mit zugeordneter Helligkeitssensorik nach einem der Ansprüche 1 bis 5,
**dadurch gekennzeichnet,**
**dass** die Helligkeitsregeleinrichtung (6) die Helligkeit der Anzeigeeinrichtung (1) bei gefahrlosem Spurwechsel für den Kraftfahrzeugfahrer unterschwellig andernfalls überschwellig einstellt.

7. Kraftfahrzeug-Anzeigeeinrichtung mit zugeordneter Helligkeitssensorik nach einem der Ansprüche 1 bis 6,
**dadurch gekennzeichnet,**
**dass** zumindest ein Lichtsensor (4, 5) als Infrarotsensor ausgeführt ist.

8. Kraftfahrzeug-Anzeigeeinrichtung mit zugeordneter Helligkeitssensorik nach einem der Ansprüche 1 bis 7,
**dadurch gekennzeichnet,**
**dass** aus den Lichtsignalen der Lichtsensoren (4, 5) die Richtung des einfallenden Lichts berechnet und ein Signal zur Einstellung der Helligkeit erzeugt wird.

## Claims

1. Motor vehicle display device, in particular for a lane-change assistant, having assigned brightness sensor technology, including:
- a light sensor (4) which receives the ambient light,
- an evaluation means (3) which is designed to evaluate the signals of the light sensor (4),
- a brightness control means (6) which is designed to change the brightness of the display device (1) on the basis of a signal of the light sensor (4),
**characterised in that** a second light sensor (5) is provided which receives the light which is directed towards the display device (1), and **in that** the evaluation means (3) is designed to evaluate the signals of the two light sensors (4, 5) and the brightness control means (6) is designed to change the brightness of the display device (1) on the basis of the signals of the two light sensors (4, 5).

2. Motor vehicle display device having assigned brightness sensor technology according to claim 1, **characterised in that** the evaluation means (3) changes the brightness of the display device (1) on the basis of the signals of the light sensors (4, 5) in conjunction with at least one characteristic curve.

3. Motor vehicle display device having assigned brightness sensor technology according to either claim 1 or claim 2, **characterised in that** at least one light sensor (4, 5) is assigned to an additional vehicle component.

4. Motor vehicle display device having assigned brightness sensor technology according to claim 3, **characterised in that** the additional vehicle component is a camera and/or a rain detector and/or a driver assistance system and/or a light control system and/or a front and/or rear monitoring system and/or a lane assist system and/or the sensor of an air-conditioning unit.

5. Motor vehicle display device having assigned brightness sensor technology according to any of claims 1 to 4, **characterised in that** the light sensors (4, 5) are configured as photodiodes and/or as a camera (7).

6. Motor vehicle display device having assigned brightness sensor technology according to any of claims 1 to 5, **characterised in that** the brightness control means (6) adjusts the brightness of the display device (1) for the driver of the motor vehicle below a threshold when it is safe to change lanes and otherwise above a threshold.

7. Motor vehicle display device having assigned brightness sensor technology according to any of claims 1 to 6, **characterised in that** at least one light sensor (4, 5) is configured as an infrared sensor.

8. Motor vehicle display device having assigned brightness sensor technology according to any of claims 1 to 7, **characterised in that** the direction of the incident light is calculated from the light signals of the light sensors (4, 5) and a signal is generated to adjust the brightness.

## Revendications

1. Dispositif d'affichage de véhicule automobile, notamment pour un assistant de changement de file, avec dispositif capteur de luminosité associé, comprenant :
- un capteur de lumière (4), qui reçoit la lumière ambiante,
- un dispositif d'évaluation (3), conçu pour l'évaluation des signaux du capteur de lumière (4),
- un dispositif de réglage de luminosité (6), conçu pour modifier la luminosité du dispositif d'affichage (1) en fonction d'un signal du capteur de lumière (4),
**caractérisé**
**en ce qu'**il est prévu un deuxième capteur de lumière (5) qui reçoit la lumière dirigée vers le dispositif d'affichage (1),
et **en ce que** le dispositif d'évaluation (3) destiné à l'évaluation des signaux des deux capteurs de lumière (4, 5) et du dispositif de réglage de luminosité (6) est conçu pour modifier la luminosité du dispositif d'affichage (1) en fonction des signaux des deux capteurs de lumière (4, 5).

2. Dispositif d'affichage de véhicule automobile avec dispositif capteur de luminosité associé selon la revendication 1, **caractérisé en ce que** le dispositif d'évaluation (3) modifie la luminosité du dispositif d'affichage (1) en fonction des signaux des capteurs de lumière (4, 5) en relation avec au moins une courbe caractéristique.

3. Dispositif d'affichage de véhicule automobile avec dispositif capteur de luminosité associé selon la revendication 1 ou selon la revendication 2, **caractérisé en ce qu'**au moins un capteur de lumière (4, 5) est associé à un autre élément du véhicule.

4. Dispositif d'affichage de véhicule automobile avec dispositif capteur de luminosité associé selon la revendication 3, **caractérisé en ce que** l'autre élément du véhicule est une caméra et/ou un détecteur de pluie et/ou un système d'assistance au conducteur et/ou un système de commande de lumière et/ou un système de surveillance de l'avant et/ou de l'arrière et/ou un système de respect de file et/ou le capteur d'une installation de climatisation.

5. Dispositif d'affichage de véhicule automobile avec dispositif capteur de luminosité associé selon l'une des revendications 1 à 4, **caractérisé en ce que** les capteurs de lumière (4, 5) sont réalisés sous forme de photodiodes et/ou de caméras (7).

6. Dispositif d'affichage de véhicule automobile avec dispositif capteur de luminosité associé selon l'une des revendications 1 à 5, **caractérisé en ce que** le dispositif de réglage de luminosité (6) règle la luminosité du dispositif d'affichage (1) au-dessous d'un certain seuil lors d'un changement de file sans danger pour le conducteur du véhicule automobile et au-dessus d'un certain seuil sinon.

7. Dispositif d'affichage de véhicule automobile avec dispositif capteur de luminosité associé selon l'une des revendications 1 à 6, **caractérisé en ce qu'**au moins un capteur de lumière (4, 5) est réalisé sous forme de capteur d'infrarouge.

8. Dispositif d'affichage de véhicule automobile avec dispositif capteur de luminosité associé selon l'une des revendications 1 à 7, **caractérisé en ce que**, à partir des signaux lumineux des capteurs de lumière (4, 5), la direction de la lumière incidente est calculée et un signal destiné au réglage de la luminosité est produit.
